(19) **Europäisches Patentamt / European Patent Office / Office européen des brevets**

(11) **EP 2 127 487 B1**

(12) **EUROPEAN PATENT SPECIFICATION**

(45) Date of publication and mention
of the grant of the patent:
**08.06.2011 Bulletin 2011/23**

(21) Application number: **08719623.4**

(22) Date of filing: **10.03.2008**

(51) Int Cl.:
***H05B 33/08*** (2006.01)

(86) International application number:
**PCT/IB2008/050862**

(87) International publication number:
**WO 2008/110978 (18.09.2008 Gazette 2008/38)**

(54) **SUPPLY CIRCUIT**

VERSORGUNGSSCHALTUNG

CIRCUIT D'ALIMENTATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.03.2007 EP 07104061**

(43) Date of publication of application:
**02.12.2009 Bulletin 2009/49**

(73) Proprietors:
 • **Philips Intellectual Property & Standards GmbH 20099 Hamburg (DE)**
 Designated Contracting States:
 **DE**
 • **Koninklijke Philips Electronics N.V. 5621 BA Eindhoven (NL)**

(72) Inventors:
 • **WENDT, Matthias NL-5656 AA Eindhoven (NL)**
 • **VAN DER BROECK, Heinz, W. NL-5656 AA Eindhoven (NL)**
 • **SAUERLAENDER, Georg NL-5656 AA Eindhoven (NL)**

(74) Representative: **Bekkers, Joost J.J Philips Intellectual Property & Standards P.O. Box 220 5600 AE Eindhoven (NL)**

(56) References cited:
 **EP-A- 1 264 518       WO-A-03/056878 WO-A1-03/088719**

**Description**

FIELD OF THE INVENTION

The invention relates to a supply circuit comprising a bridge circuit and a resonance circuit, the resonance circuit comprising a primary part to be coupled to the bridge circuit and a secondary part to be coupled to a load circuit, the load circuit comprising a light emitting diode, the resonance circuit comprising a further secondary part to be coupled to a further load circuit, the further load circuit comprising a further light emitting diode, and also relates to a device comprising a supply circuit and a load circuit.

Examples of such a supply circuit are switched mode power supplies, without excluding other supply circuits. Examples of such a device are consumer products and non-consumer products. Examples of such a load circuit are one light emitting diode and two or more serial light emitting diodes and two or more parallel light emitting diodes, without excluding other load circuits.

BACKGROUND OF THE INVENTION

A prior art supply circuit is known from WO 2005/048658, which discloses a resonant power light emitting diode control circuit with brightness and color control. This prior art supply circuit comprises a bridge circuit including a half bridge or a full bridge and comprises a resonance circuit including a transformer. A primary side of the transformer is coupled to the bridge circuit via a capacitor. The capacitor and the primary side of the transformer together form elements defining a resonance frequency (or period) and an impedance. A secondary side of the transformer is coupled to a load circuit.

This prior art supply circuit supplies the load circuit with a load dependent output signal such as a load dependent output current, and requires a feedback loop for controlling the bridge circuit in response to detected light from the load circuit or measured currents flowing through the load circuit.

WO 03/056878 discloses a light emitting diode driver.

WO 03/088719 discloses a circuit arrangement for supplying light emitting diodes.

SUMMARY OF THE INVENTION

It is an object of the invention, inter alia, to provide an improved supply circuit.

It is a further object of the invention, inter alia, to provide a device comprising an improved supply circuit.

According to the invention, the supply circuit is characterized in that the primary part comprises a primary winding of a transformer, the secondary part comprising a secondary winding of the transformer and elements defming a resonance frequency and an impedance, the elements comprising a capacitor and an inductor, the impedance being equal to a root of an inductance value of the inductor divided by a root of a capacitance value of the capacitor, the further secondary part comprising further elements defining a further resonance frequency and a further impedance, the further resonance frequency being substantially equal to the resonance frequency and the further impedance being substantially different from the impedance, the resonance frequency defining a pulse width of a pulse of a voltage signal and/or a pulse frequency of the voltage signal to be supplied from the bridge circuit to the resonance circuit, a switching frequency of the bridge circuit being substantially equal to half the resonance frequency, and the impedance defining a value of a current signal and/or an average value of the current signal to be supplied from the resonance circuit to the load circuit.

By locating the elements defining a resonance frequency (or period) and an impedance at a secondary side of the resonance circuit, different load circuits can be supplied individually via one and the same supply circuit by using a first secondary part of the resonance circuit for a first load circuit and by using a second secondary part of the resonance circuit for a second load circuit. This resonant circuit has first and second primary parts coupled to each other in parallel and has first and second secondary parts each coupled to their own load circuits. Alternatively, one and the same primary part may be coupled to two or more secondary parts. As a result, the supply circuit is capable of supplying different load circuits individually. Identical load circuits may be coupled in parallel to one and the same secondary part of the resonance circuit or may be coupled to the bridge circuit via identical or non-identical secondary parts of the resonance circuit. Non-identical load circuits will usually be coupled to the bridge circuit via non-identical secondary parts of the resonance circuit.

The supply circuit according to the invention is further advantageous, inter alia, in that it is capable of supplying different loads in a load circuit individually. In case a load in a load circuit is to be replaced by another different load, the elements in the secondary part of the resonance circuit may need to be replaced by other different elements. Owing to the fact that these elements have been located in the secondary part of the resonance circuit, it may become easier and/or safer to replace such elements.

So, a problem to provide an improved supply circuit has been solved. Further, the supply circuit supplies each load circuit with a load independent output signal such as a load independent output current, and does not require a feedback loop for controlling the bridge circuit. A switching frequency of the bridge circuit is chosen to be approximately 50% of a resonance frequency of the elements; preferably the switching frequency is exactly 50% of this resonance frequency.

The resonance circuit comprises a transformer. A primary side of the transformer is coupled to the bridge circuit and a secondary side of the transformer is coupled via a series capacitor to the load circuit. In this case, the secondary side of the transformer (and/or a leakage inductance of the transformer) and the series capacitor form the elements defining a resonance frequency (or period) and an impedance. The primary part comprises a primary winding, and the secondary part comprises a secondary winding and the capacitor.

Different impedances for example allow different (average) values of current signals to be set for identical load circuits and allow identical (average) values of current signals to be set for different load circuits.

An embodiment of the supply circuit according to the invention is defined by the resonance circuit comprising a further primary part to be coupled to the bridge circuit, the further primary part comprising a primary winding of a further transformer, the further secondary part comprising a secondary winding of the further transformer.

An embodiment of the supply circuit according to the invention is defined by the further secondary part comprising a further secondary winding of the transformer.

An embodiment of the supply circuit according to the invention is defined by the inductor comprising the secondary winding and/or a leakage inductance of the transformer.

An embodiment of the supply circuit according to the invention is defined by further comprising a switch for dimming the light emitting diode of the load circuit. Such a switch may for example comprise a transistor or a thyristor or a triac and may for example be located in parallel to a load in case of the load receiving a substantially constant current signal and may for example be located serially to a load in case of the load receiving a substantially constant voltage signal.

An embodiment of the supply circuit according to the invention is defined by further comprising a controller for controlling the switch in synchronization with the bridge circuit. By switching the bridge circuit as well as the switch at zero current, electromagnetic interference is minimized.

An embodiment of the supply circuit according to the invention is defined by further comprising a smoothing capacitor for smoothing an input signal for the light emitting diode of the load circuit. The input signal is for example a current signal flowing through a string of light emitting diodes of the load circuit.

An embodiment of the supply circuit according to the invention is defined by further comprising decoupling diodes for decoupling two anti-parallel groups of light emitting diodes of the load circuit from each other.

Embodiments of the device according to the invention correspond with the embodiments of the supply circuit according to the invention.

The invention is based on the insight, inter alia, that different load circuits and/or different loads in a load circuit may need to be supplied individually, and is based on the basic idea, inter alia, that in a resonance circuit the elements defining a resonance frequency and an impedance are to be located relatively close to a load circuit and relatively away from a bridge circuit.

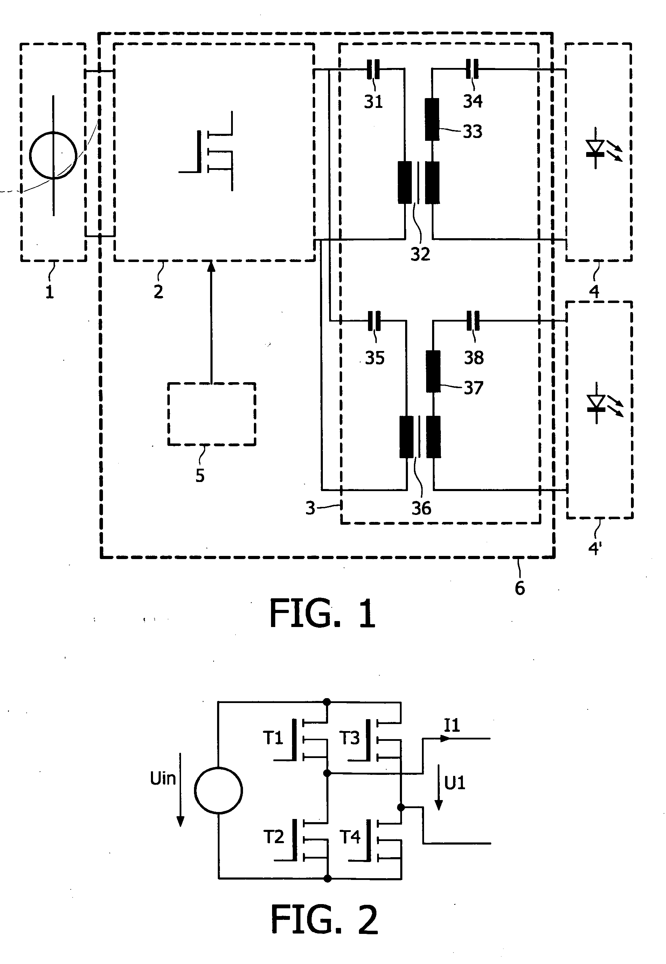

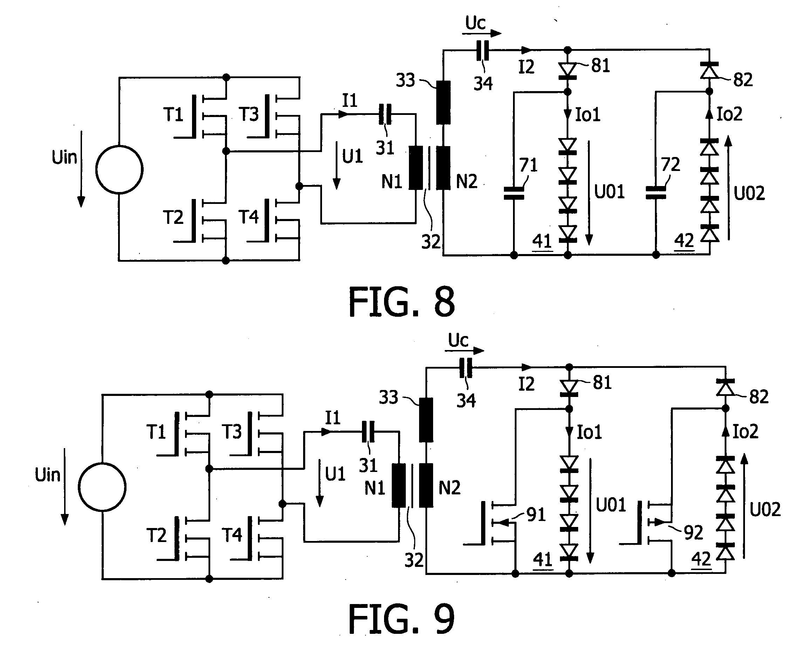

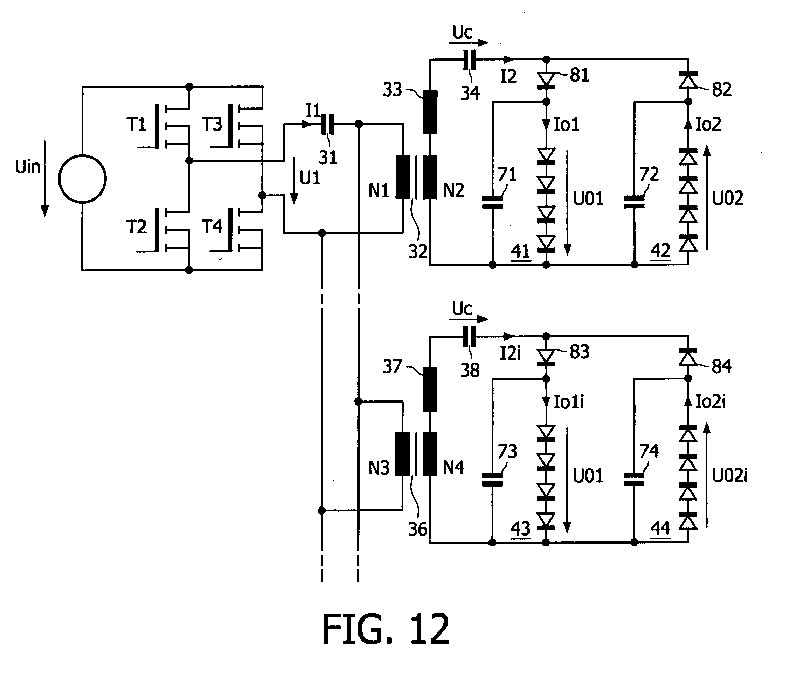

These and other aspects of the invention will be apparent from and elucidated with reference to the embodiments (s) described hereinafter. Only embodiment of figure 12 corresponds to the invention and solves the problem of supplying several load circuits with different current level; figures 1-7, 16-21 show general implemutations of the supply circuit, bridge (with the relative output waveforms) end load circuits. Figures 8-11, 13-15 show examples of circuits for illustrative purpose only.

BRIEF DESCRIPTION OF THE DRAWINGS

In the drawings:

Fig. 1 shows diagrammatically a general supply circuit according to the invention comprising a bridge circuit and a resonance circuit,
Fig. 2 shows diagrammatically a first embodiment of the bridge circuit coupled to a source,
Fig. 3 shows a voltage signal generated by the bridge circuit of the Fig. 2,
Fig. 4 shows a voltage signal and a current signal generated by the bridge circuit of the Fig. 2,
Fig. 5 shows diagrammatically a second embodiment of the bridge circuit coupled to a source,
Fig. 6 shows a voltage signal generated by the bridge circuit of the Fig. 5,
Fig. 7 shows a voltage signal and a current signal generated by the bridge circuit of the Fig. 5,
Fig. 8 shows a first example of the supply circuit coupled to a source and to a load,
Fig. 9 shows a second example of the supply circuit coupled to a source and to a load,
Fig. 10 shows a third example of the supply circuit coupled to a source and to a load,
Fig. 11 shows a fourth example of the supply circuit coupled to a source and to a load,

Fig. 12 shows a first embodiment of the supply circuit coupled to a source and to a load,

Fig. 13 shows a fifth example of the supply circuit coupled to a source and to a load,

Fig. 14 shows a sixth example of the supply circuit coupled to a source and to a load,

Fig. 15 shows an seventh example of the supply circuit coupled to a source and to a load,

Fig. 16 shows diagrammatically a third embodiment of the bridge circuit coupled to a source,

Fig. 17 shows diagrammatically a fourth embodiment of the bridge circuit coupled to a source,

Fig. 18 shows diagrammatically a first embodiment of the resonance circuit comprising a general diode capacitor network,

Fig. 19 shows diagrammatically a second embodiment of the resonance circuit comprising a specific diode capacitor network for voltage multiplication.

Fig. 20 shows diagrammatically a bridge circuit extended by a capacitive snubber circuit comprising additional capacitors and an inductor, and

Fig. 21 shows the additional current Im generated by the snubber circuit.

## DETAILED DESCRIPTION OF EMBODIMENTS

The supply circuit 6 according to the invention shown in Fig. 1 comprises a bridge circuit 2 coupled to a DC source of a source circuit 1 and controlled by a controller 5 and comprises a resonance circuit 3 coupled to the bridge circuit 2 and to load circuits 4 and 4' each comprising one or more loads. The resonance circuit 3 comprises at least a first primary part comprising a primary winding of a transformer 32 and comprises at least a first secondary part comprising a secondary winding of the transformer 32 coupled serially to a leakage inductance 33 and a capacitor 34. The leakage inductance 33 and the secondary winding may be considered to be one inductor or two inductors. The first secondary part is coupled to a load circuit 4. The resonance circuit 3 may further comprise at least a second primary part comprising a primary winding of a transformer 36 and comprises at least a second secondary part comprising a secondary winding of the transformer 36 coupled serially to a leakage inductance 37 and a capacitor 38. The leakage inductance 37 and the secondary winding may be considered to be one inductor or two inductors. The second secondary part is coupled to a further load circuit 4'. The primary winding of the first transformer 32 is coupled via a coupling capacitor 31 to the bridge circuit 2 and the primary winding of the second transformer 36 is coupled via a coupling capacitor 35 to the bridge circuit 2, alternatively both primary windings may be coupled via one and the same coupling capacitor to the bridge circuit 2.

Fig. 2 shows diagrammatically a first embodiment (full bridge) of the bridge circuit 2 coupled to a DC source Uin.

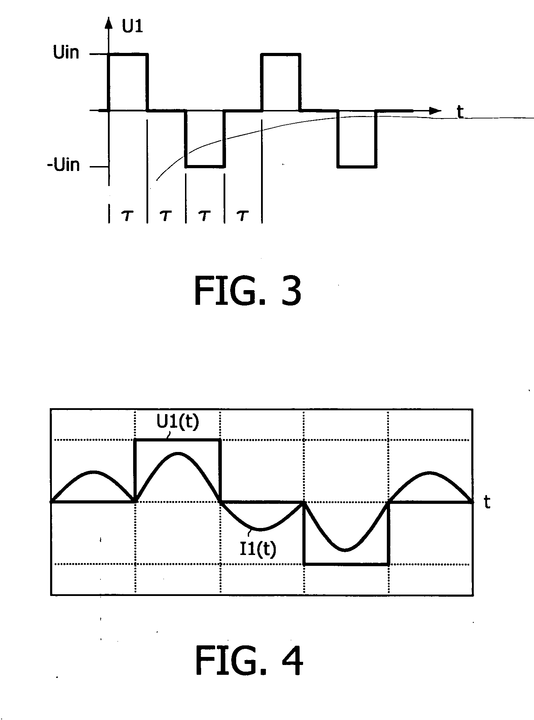

Fig. 3 shows a voltage signal U1(t) generated by the bridge circuit 2 of the Fig. 2 and supplied to the resonance circuit 3, this voltage signal U1(t) comprises a positive pulse having an amplitude Uin, followed by a zero pulse, followed by a negative pulse having an amplitude Uin, and followed by another zero pulse, each pulse having a duration tau, the voltage signal U1(t) having a period 4tau.

Fig. 4 shows a voltage signal U1(t) and a current signal I1(t) generated by the bridge circuit 2 of the Fig. 2 and supplied to the resonance circuit 3.

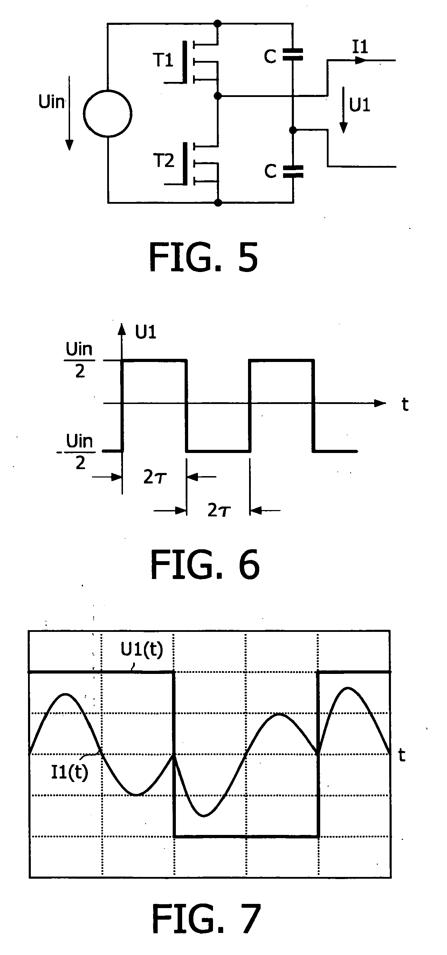

Fig. 5 shows diagrammatically a second embodiment of the bridge circuit (half bridge) coupled to a DC source Uin.

Fig. 6 shows a voltage signal U1(t) generated by the bridge circuit of the Fig. 5 and supplied to the resonance circuit 3, this voltage signal U1(t) comprises a positive pulse having an amplitude Uin/2, followed by a negative pulse having an amplitude Uin/2, each pulse having a duration 2tau, the voltage signal U1(t) having a period 4tau.

Fig. 7 shows a voltage signal U1(t) and a current signal I1(t) generated by the bridge circuit 2 of the Fig. 5 and supplied to the resonance circuit 3.

Fig. 8 shows a first example of the supply circuit coupled to a source and to a load. This supply circuit comprises a bridge circuit based on a full bridge and a resonance circuit based on a transformer 32 having a primary winding N1 and a secondary winding N2. This secondary winding N2 is serially coupled via a leakage inductance 33 and a capacitor 34 to two anti-parallel branches. A first branch comprises a first decoupling diode 81 coupled to a first string of light emitting diodes 41, the first string being coupled in parallel to a first smoothing capacitor 71. A second branch comprises a second decoupling diode 82 coupled to a second string of light emitting diodes 42, the second string being coupled in parallel to a second smoothing capacitor 72. Each one of the units 71-72 and 81-82 may form part of the resonance circuit 3 or of the load circuit 4. The smoothing capacitors 71 and 72 may also be removed. In this case the current in the LEDs becomes pulsating but its average value remains unaffected.

Fig. 9 shows a second example of the supply circuit coupled to a source and to a load. This supply circuit differs from the one shown in the Fig. 8 in that the smoothing capacitors 71-72 have been replaced by switches 91-92 in the form of transistors for dimming the strings. Thereto, the switches 91-92 are to be switched on and off, preferably in synchronization with the bridge circuit to minimize electromagnetic interference. In the latter case, the controller 5 may be used for controlling these switches 91-92 as well. A duty cycle of the switching of the switches determines a dimming factor.

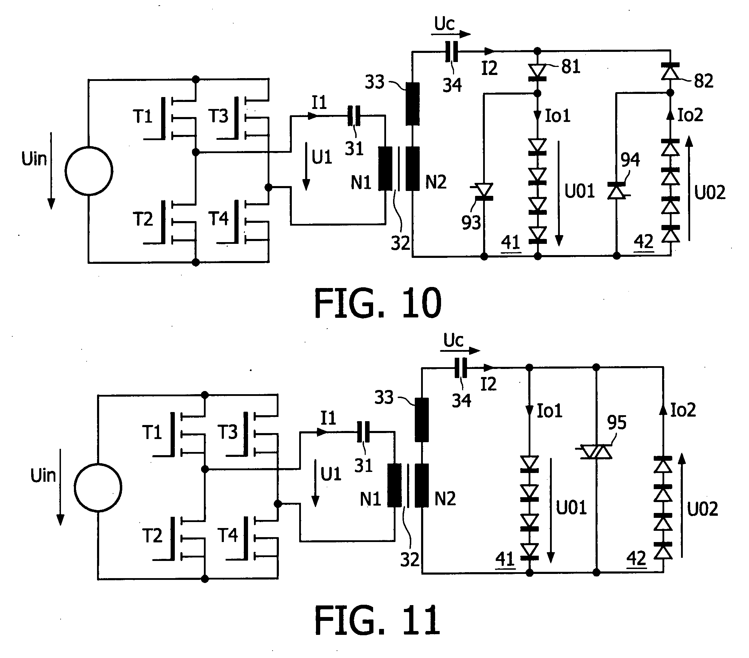

Fig. 10 shows a third example of the supply circuit coupled to a source and to a load. This supply circuit differs from the one shown in the Fig. 9 in that the switches 93-94 are in the form of thyristors for dimming the strings.

Fig. 11 shows a fourth example of the supply circuit coupled to a source and to a load. This supply circuit differs from the one shown in the Fig. 9 and 10 in that the decoupling diodes have been removed and in that both switches have been replaced by one switch 95 in the form of a triac for dimming both strings.

Fig. 12 shows a first embodiment of the supply circuit coupled to a source and to a load. This supply circuit has a resonance circuit comprising two transformers 32 and 36. The transformer 32 and its following circuitry has been discussed before. The transformer 36 has a primary winding N3 and a secondary winding N4. This secondary winding N4 is serially coupled via a leakage inductance 37 and a capacitor 38 to two anti-parallel branches. A third branch comprises a third decoupling diode 83 coupled to a third string of light emitting diodes 43, the third string being coupled in parallel to a third smoothing capacitor 73. A fourth branch comprises a fourth decoupling diode 84 coupled to a fourth string of light emitting diodes 44, the fourth string being coupled in parallel to a fourth smoothing capacitor 74. Each one of the units 73-74 and 83-84 may form part of the resonance circuit 3 or of the further load circuit 4'. N1 and N3 may be equal or different and N2 and N4 may be equal or different.

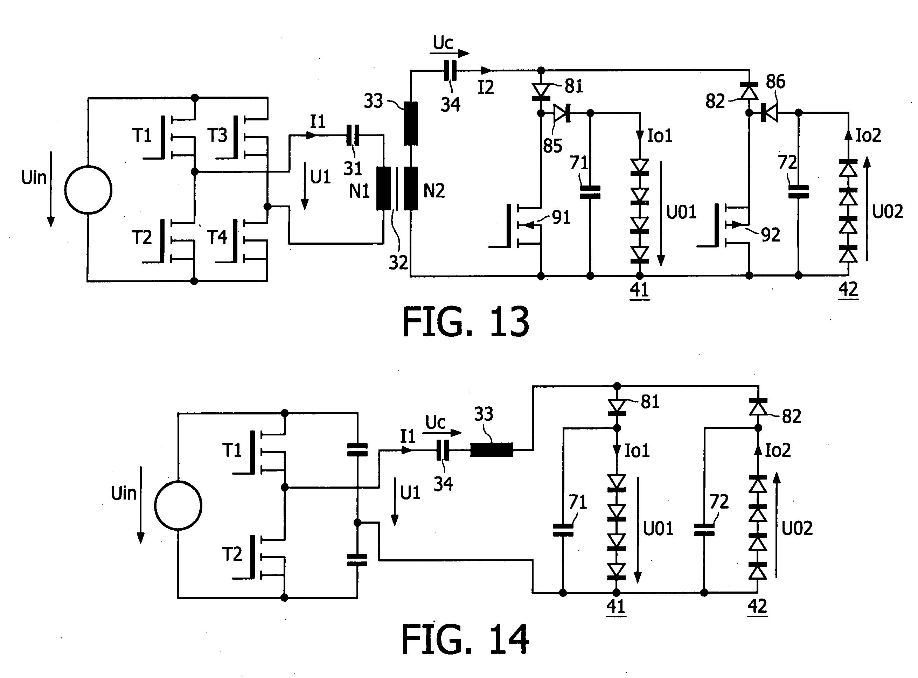

Fig. 13 shows a fifth example of the supply circuit coupled to a source and to a load. In this case, the first branch comprises the first decoupling diode 81 coupled to a parallel circuit of the first switch 91 and circuitry 41,71,85. The circuitry 41,71,85 comprises a serial circuit of a further first decoupling diode 85 and a parallel circuit comprising the first smoothing capacitor 71 and the first string 41 all already discussed before. The second branch comprises the second decoupling diode 82 coupled to a parallel circuit of the second switch 92 and circuitry 42,72,86. The circuitry 42,72,86 comprises a serial circuit of a further second decoupling diode 86 and a parallel circuit comprising the second smoothing capacitor 72 and the second string 42 all already discussed before.

Fig. 14 shows a sixth example of the supply circuit coupled to a source and to a load. This supply circuit comprises a bridge circuit based on a half bridge and a resonance circuit based on a series circuit of a capacitor 34 and an inductor 33 coupled to circuitry 41-42,71-72,81-82 all discussed before.

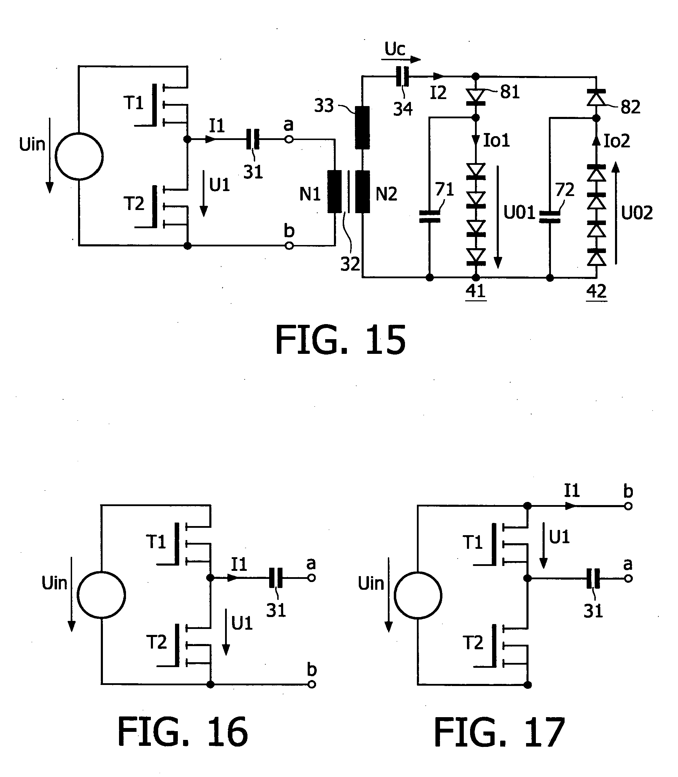

Fig. 15 shows an seventh example of the supply circuit coupled to a source and to a load. This supply circuit comprises a bridge circuit based on a half bridge and a resonance circuit in line with the one shown in the Fig. 8.

Fig. 16 shows diagrammatically a third embodiment of the bridge circuit (half bridge) coupled to a DC source Uin.

Fig. 17 shows diagrammatically a fourth embodiment of the bridge circuit (half bridge) coupled to a DC source Uin.

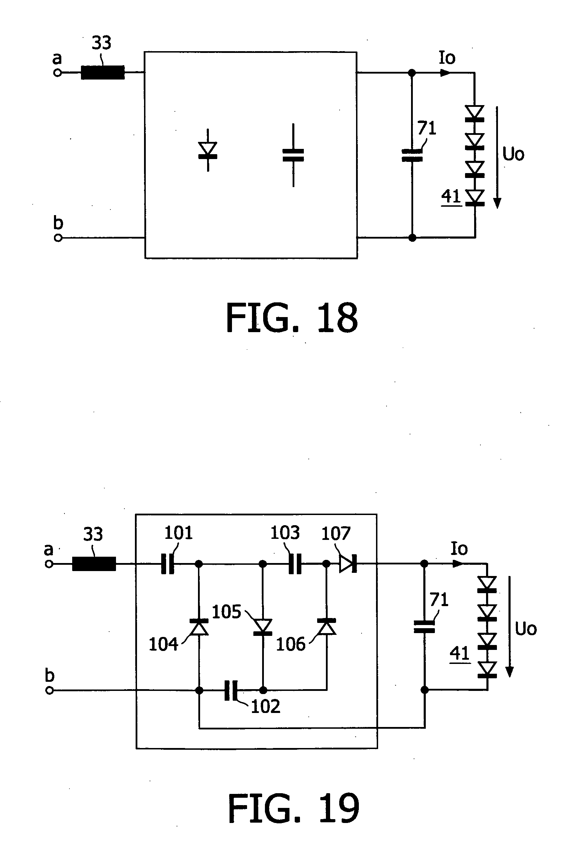

Fig. 18 shows diagrammatically a first embodiment of the resonance circuit comprising a general diode capacitor network coupled in parallel to a smoothing capacitor 71 and a string 41. The general diode capacitor network is further coupled serially via an inductor 33 to a bridge circuit not shown here and realizes a capacitance that together with the inductor 33 forms the elements defining a resonance frequency and an impedance.

Fig. 19 shows diagrammatically a second embodiment of the resonance circuit comprising a specific diode capacitor network for voltage multiplication. The specific diode capacitor network comprises a capacitor 101 of which one side is coupled to the inductor 33 and of which the other side is coupled to one side of a capacitor 103 and to one side of diodes 104 and 105. The other side of the diode 104 is coupled to one side of a capacitor 102 and to one side of the parallel circuit of the smoothing capacitor 71 and the string 41. The other side of the capacitor 103 is coupled to one side of diodes 106 and 107. The other side of the diode 107 is coupled to the other side of side of the parallel circuit of the smoothing capacitor 71 and the string 41. The other side of the capacitor 102 is coupled to the other side of the diodes 105 and 106. This diode capacitor network has a voltage multiplying function and realizes a capacitance that together with the inductor 33 forms the elements defining a resonance frequency and an impedance.

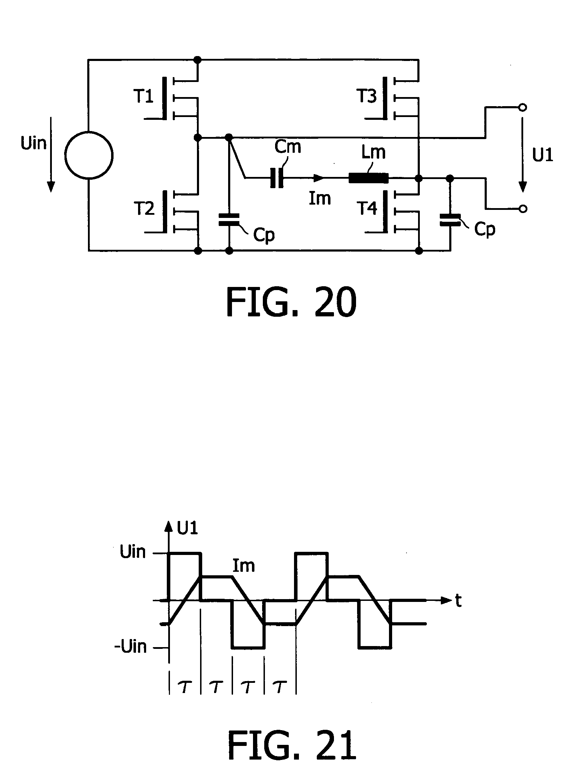

Fig. 20 shows diagrammatically another embodiment of the bridge circuit 2 comprising a snubber network to provide zero voltage switching. This snubber network consists of capacitors Cp connected in parallel to each half-bridge and a series connection of an inductor Lm and a capacitor Cm connected to the output terminals of the bridge circuit. The capacitor Cm shows a large capacitance and it is only applied to prevent a DC current in the inductor Lm.

As shown in the Fig. 21 the supply voltage U1 generates a certain current Im in the inductor. This current is used to perform zero voltage switching in the snubber capacitors Cp of the half-bridges. It requires all transistors to be in the off-state for a short time during switching. This dead time has at least to cover the commutation time of the transistor voltage from Uin to zero or vice versa. The snubber capacitors may also be connected to the upper transistors of the bridge or the parasitic capacitances of the transistors may be used as snubber capacitors.

In other words, the invention may concern a novel galvanic isolating, resonant operating driver topology for independent current control in multiple light emitting diode or LED strings. This driver topology may be supplied by a substantially stabilized DC voltage, generated by for example a pre-conditioner circuit from the AC line. The invented resonant driver topology may consist of one main transistor H-bridge or of one main transistor half-bridge and multiple LED loads. The resonant topology may be formed by a stray inductance of a transformer and a series capacitor on a secondary side. The H-bridge may be switched by a fixed frequency and duty cycle, which generates alternately positive and negative voltage pulses and zero voltage states in between. All voltage states may show the same pulse width, which may be equal to half the resonant period.

In case of a transistor half-bridge a 50% duty cycle may be set and the switching frequency may be half the resonant frequency.

For dimming purposes, additional transistors can be inserted to bypass single LED strings. The basic topology and control scheme is presented in Fig. 8 and 14. It can be operated with and without the smoothing capacitors. Fig. 9 shows an extended version of the driver for providing independent LED current control.

The bridge supply circuit can also be operated in zero voltage-switching mode by adding a capacitive snubber circuit as shown in the Fig. 20 and 21.

The invented resonant LED driver circuit provides the following features:

- The LED driver provides galvanic isolation by means of a transformer and allows voltage adapting by the transformer turns ratio.
- The parasitic leakage inductance of the transformer is involved in the circuit operation and it is thus part of the driver.
- The leakage inductance does not need to be minimized. This is of advantage for the isolation and winding design and it thus keeps the costs low.
- The currents in the converter always flow sinusoidally and the transistors of the converter are only switched at zero current. This holds for all transistors of the main H-bridge or of the half-bridge as well as for transistors, which may be connected in parallel to the LED strings for individual dimming purposes. As an advantage the EMI contribution of the driver circuit can be kept very low.
- The EMI behavior can be further improved by adding a capacitive snubber circuit to the supplying bridge or half bridge to perform zero voltage switching.
- The average current in the LED load is automatically stabilized and determined by the input voltage Uin and the impedance Zres.
- The average currents of both LED strings are independent of the number of LEDs connected in series including a short circuit output. Thus, all outputs are short circuit proved.
- The average currents in both LED loads also remain constant in case of asymmetrical load voltages (different number of LEDs connected in series). This also includes a single short output.
- In case of asymmetrical output load voltages the series capacitor of the secondary side automatically prevents a DC offset at the transformer.
- If the LED averaged load voltage is higher than the transformed input voltage, no current flows. Hence, the converter is no load proved.
- The LED currents can be smoothed to pure DC by additional capacitors without influencing the average LED current.
- The LED driver system does not require a current sensor.
- The power and control unit of the main H-bridge or the half-bridge can be integrated in a smart power IC.
- The LED currents can be controlled by using bypassing transistors (Fig. 9). This allows independent dimming functions for both outputs.
- In addition, common dimming for both output currents may be achieved by decreasing the switching frequency.
- One basic H-bridge or one basic half-bridge can be used to supply multiple transformer-resonant-LED loads.

A main power part consists of one H-bridge realized by 4 transistors (T1,T2,T3,T4). These transistors can be MOSFETs but also any other semiconductor switches. The transistors may be operated by a fixed control scheme, which alternately generates at the H-bridge output a positive and negative voltage pulse and zero voltage states between the pulses. All voltages states should occur for the same time duration. The resulting output voltage of the H-bridge U1 (t) is shown in Fig. 3. The H-bridge supplies a transformer, which is characterized by the number of turns on the primary side N1, the number of turns on the secondary side N2 and the leakage inductance. The leakage inductance of the transformer can either be assigned to the primary or to the secondary side. For the invention the leakage inductance should be assigned to the secondary side. A series capacitor on the primary side is used to prevent a DC offset at the transformer. Since the output voltage of the H-bridge has no principle offset the voltage at this series capacitor may be very low. An offset at the transformer may also be prevented by any adapted control scheme for the main H-bridge (T1,T2,T3,T4). The leakage inductance of the transformer and the series capacitor on the secondary side form a resonant circuit characterized by the resonant frequency $f_{RES} = \dfrac{1}{2 \cdot \pi \cdot \sqrt{Ls \cdot Cs}} = \dfrac{1}{T_{RES}}$ and by the impedance

$$Z_{RES} = \sqrt{\dfrac{Ls}{Cs}} \,.$$

One transformer can be used to supply two LED strings LED1 and LED2, which are decoupled by the decoupling diodes D1 and D2. In order to smooth the current in the LED strings, the smoothing capacitors can be added.

The pulse time of the H-bridge output voltage should be equal to half the resonant period $\tau = T_{RES}/2$. Thus, the switching frequency of the H-bridge is half the resonant frequency fs = fres/2.

If the conditions are fulfilled, two successive sinusoidal half-wave current pulses are drawn from the H-bridge for each voltage pulse. Neglecting the magnetization current, the secondary current of the transformer is proportional to the primary current $I2 = I1 \cdot \dfrac{N1}{N2}$.

The characteristic secondary transformer current I1(t) is presented in Fig. 4 for a certain operation point. It is split in a positive and a negative part by the diodes decoupling diodes. The positive current is flowing in the LED string 41 while the negative part flows in the LED string 42.

Under the given conditions the average current in both LED strings is constant. It can be set by the input voltage Uin, the impedance Zres and by the winding turn ratio of the transformer:

$$\bar{I}_{01} = \bar{I}_{02} = \frac{Uin}{Z_{RES}} \cdot \frac{1}{\pi} \cdot \frac{N2}{N1}$$

The average current in the LEDs is not influenced by the voltage drop of the LEDs. It is thus possible to supply an arbitrary number of LEDs.

The average output current remains constant for any asymmetrical load voltage distribution given by

$$0 \le \frac{U_{01} + U_{02}}{2} \le \frac{N2}{N1} \cdot Uin$$

If the number of LEDs leads to a corresponding voltage drop higher than the given upper limit $\dfrac{U_{01} + U_{02}}{2} > \dfrac{N2}{N1} \cdot Uin$, no current flows. The LED driver is thus short circuit proved and no load proved.

The converter can also be operated without the smoothing capacitors. In this case the positive part of the current I1(t) is identical to the LED current Io1 while the negative part is identical to the LED current Io2. As an important feature the averaged current is not affected by the smoothing capacitors. During the pulses the amplitude of the current sinewave of I1(t) can be described by the equation $\hat{I}_1 = \dfrac{Uo1 + Uo2}{2 \cdot Z_{RES}}$ while the amplitude during the free wheel state can be described by the equation

$$\hat{I}_1 = \left( Uin \cdot \frac{N2}{N1} - \frac{Uo1 + Uo2}{2} \right) \cdot \frac{1}{Zres}$$

The Fig. 4 shows the resulting current I1(t) for

$$Uo1 = \frac{N2}{N1} \cdot Uin \cdot \frac{3}{4} \quad \text{and} \quad Uo2 = \frac{N2}{N1} \cdot Uin \cdot \frac{1}{2}$$

Since the average current is independent of the load voltage including a short output, the converter can be extended to perform independent dimming functions.

This is presented in Fig. 9, where instead of the smoothing capacitors the transistors are inserted. If these transistors are in the on-state the current I1(t) is bypassed so that the current in the LED string becomes zero. By turning on and off these transistors repetitively, the average current in the corresponding LED string can be controlled between a nominal value and zero.

The on- and off-time instances of the transistors may be set by any control scheme. It is however favorable if these times are synchronized with the frequency of the H-bridge. In this case the control signals can be derived from the secondary voltage of the transformer and switching only occurs at zero current. The limited resolution of the LED current - determined by the switching period $T = 2 \cdot \tau$- can usually be tolerated.

As shown in Fig. 10 the dimming function may also be realized by two fast thyristors.

Another alternative component to control the LED currents is a fast triac, which performs the dimming function for both LED strings (see Fig. 11).

The dimming function can also be applied to the LED load with smoothing capacitors. In this case two additional decoupling diodes may be required as illustrated in Fig 13.

The LED string modules presented before may be multiple connected to one H-bridge. This is shown in Fig. 12. Each module has its own transformer. The resonant elements are formed individually by the capacitance and the leakage inductance. Different output currents can be chosen by varying the turn ratio of the transformer. Moreover, it is also possible to change the averaged output current by varying the properties of the resonant inductance and the capacitance for a fixed resonance frequency. The LED transformer module may employ a smoothing capacitor or transistors or thyristors for individual dimming operation.

Possible modifications of the invention are :

- On the secondary side of the resonance circuit, a full-bridge rectifier may be used to supply one LED string.
- The driver can be supplied by any other stabilized DC voltage.
- The driver may be realized without transformer but a series choke for forming the resonant topology.
- Each LED could be dimmed individually by a bypassing switch.
- Another possible modification is the use of a transistor half-bridge instead of a transistor H-bridge. This is illustrated in Fig. 16 and 17.

In case of a half-bridge two out of four transistors T3 and T4 may be replaced by capacitors, which provide a voltage divider. In order to achieve a similar behavior for the LED load, the half-bridge may be controlled by a fixed duty cycle of for example 50% and a fixed switching frequency equal to for example half the resonant frequency fs= $f_{RES}$/2. The resulting voltage U1(t) is shown in Fig. 6.

The half-bridge topology can be used to supply the same load as the H-bridge including all transformer and dimming options.

As one example Fig. 14 presents the direct supply of two decoupled LED loads showing the voltage drop Uo1 and Uo2. The series resonance is formed in the same way as in case of a H-bridge:

$$ f_{RES} = \frac{1}{2 \cdot \pi \cdot \sqrt{Ls \cdot Cs}} = \frac{1}{T_{RES}} \qquad \qquad Z_{RES} = \sqrt{\frac{Ls}{Cs}} $$

Under these conditions two successive sinusoidal half-wave currents are drawn from the half-bridge in each half period. This is shown in the diagram of Fig. 7 which has been derived for Uo1=Uin/4 and Uo2=0.

The first half-wave is drawn from the input voltage. Its amplitude can be determined by using the equation:

$$ \hat{I}_1 = \left( Uin \cdot \frac{1}{2} + \frac{Uo1 + Uo2}{2} \right) \cdot \frac{1}{Zres} $$

The second current half-wave is fed back to input voltage source. Its amplitude is given by

$$ \hat{I}_2 = \left( Uin \cdot \frac{1}{2} - \frac{Uo1 + Uo2}{2} \right) \cdot \frac{1}{Zres} $$

Both current half-waves are also feeding the LED load.

This leads to an average output current in both LED loads which is independent of the voltage drop

$$\bar{I}_{01} = \bar{I}_{02} = \frac{Uin}{Z_{RES}} \cdot \frac{1}{\pi} \cdot \frac{1}{2}$$

Note that any asymmetrical load can be supplied including a short circuit in one or both outputs. This behavior of the circuit occurs for load voltages

$$0 \leq U_{01} + U_{02} \leq \cdot Uin$$

For higher output voltage drops no current flows.

Another possible configuration of the half-bridge is presented in Fig. 16 and 17.

In these power drivers the capacitive voltage divider is omitted. The corresponding voltage offset of U1(t) has to be taken over by the series capacitor. The resulting resonant current I1(t) and the load currents are the same as in case of a driver with capacitive voltage divider.

Another possible modification of the LED driver can be seen in the extension of the resonant circuit by more diodes and capacitors. Based on the output terminals (a,b) of the full- and half-bridge configurations presented, a series inductor and a diode-capacitor network may be inserted to feed the LED load. This is illustrated in Fig. 18. The diode capacitor network behaves like a voltage multiplier circuit allowing load voltage higher than the input DC voltage. Fig. 19 shows one example of a resonant driver extended by a diode capacitor network. Note that the capacitors of the diode capacitor network may influence the resonant frequency of the circuit. This can be adapted by the inductance of the series inductor. Similar to earlier explanation the smoothing capacitor connected in parallel to the LED load may be removed without influencing the average load current.

Potential applications are for example wall flooding, LCD backlighting and general illumination.

Summarizing, in supply circuits 6 comprising bridge circuits 2 and resonance circuits 3 with transformers 32 and primary parts comprising primary windings of the transformers 32 to be coupled to the bridge circuits 2 and secondary parts comprising secondary windings of the transformers 32 to be coupled to load circuits 4 comprising light emitting diodes 41-42, the secondary parts are provided with elements 33-34 defining resonance frequencies and impedances. The elements 33-34 may comprise capacitors 34 and inductors. The resonance frequencies define features of primary signals to be supplied from the bridge circuits 2 to the resonance circuits 3 such as pulse widths of pulses of voltage signals and/or pulse frequencies of the voltage signals. The impedances define features of secondary signals to be supplied from the resonance circuits 3 to the load circuits 4 such as values or average values of current signals.

A term "substantially equal" defines maximum deviations <30%, preferably <20%, further preferably <10%, most preferably <1%. In other words, such a term defines intervals of 70-130%, preferably 80-120%, further preferably 90-110%, most preferably 99-101%. A term "substantially different" defmes minimum deviations of >1%, preferably >10%, further preferably >20%, most preferably >30%. In other words, such a term defines intervals of <99% and >101%, preferably <90% and >110%, further preferably <80% and >120%, most preferably <70% and >130%.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. Supply circuit (6) comprising a bridge circuit (2) and a resonance circuit (3), the resonance circuit (3) comprising a first primary part coupled to the bridge circuit (2) and a first secondary part to be coupled to a first load circuit (4), the first load circuit (4) comprising a first light emitting diode (41-42), the resonance circuit (3) comprising a further secondary part to be coupled to a further load circuit (4'), the further load circuit (4') comprising a further light emitting diode (43-44), **characterized in that**
the first primary part comprises a first primary winding of a transformer (32),
the first secondary part comprises a first secondary winding of the transformer (32) and first elements (33-34) defining a first resonance frequency and a first impedance, the first elements (33-34) comprising a first capacitor (34) and a first inductor, the first impedance being equal to a square root of an inductance value of the first inductor divided by a square root of a capacitance value of the first capacitor (34),

the further secondary part comprises further elements (37-38) defining a further resonance frequency and a further impedance, the further resonance frequency being substantially equal to the first resonance frequency and the further impedance being substantially different from the first impedance, the first resonance frequency defining a switching frequency of a voltage signal to be supplied from the bridge circuit (2) to the resonance circuit (3), the switching frequency of the bridge circuit (2) being substantially equal to half the first resonance frequency, and each impedance defining an average value of a respective current signal to be supplied from the resonance circuit (3) to the respective load circuit (4, 4'), and

the further secondary part comprises a further secondary winding of the transformer (32), or the resonance circuit (3) comprising a further primary part coupled to the bridge circuit (2) whereby the further primary part comprises a primary winding of an other transformers (36) and whereby the further secondary part comprises a secondary winding of the other transformer (36).

2. Supply circuit (6) as defined in the claim 1, the first inductor comprising the first secondary winding and/or a leakage inductance (33) of the transformer (32).

3. Supply circuit (6) as defined in claim 1, further comprising a switch (91-95) for dimming the first light emitting diode (41-42) of the first load circuit (4).

4. Supply circuit (6) as defined in claim 3, further comprising a controller for controlling the switch (91-95) in synchronization with the bridge circuit (2).

5. Supply circuit (6) as defined in claim 1, further comprising a smoothing capacitor (71-72) for smoothing an input signal for the first light emitting diode (41-42) of the first load circuit (4).

6. Supply circuit (6) as defined in claim 1, further comprising decoupling diodes (81-82) for decoupling two anti-parallel groups of first light emitting diodes (41-42) of the first load circuit (4) from each other.

7. Device comprising the supply circuit (6) as defined in claim 1 and further comprising the first load circuit (4).

**Patentansprüche**

1. Versorgungsschaltung (6) mit einer Brückenschaltung (7) und einer Resonanzschaltung (3), wobei die Resonanzschaltung (3) einen ersten mit der Brückenschaltung (2) gekoppelten Primärteil und einen ersten mit einer ersten Lastschaltung (4) gekoppelten Sekundärteil aufweist, wobei die erste Lastschaltung (4) eine erste Leuchtdiode (41-42) aufweist, wobei die Resonanzschaltung (3) einen mit einer weiteren Lastschaltung (4') zu koppelnden weiteren Sekundärteil aufweist, wobei die weitere Lastschaltung (4') eine weitere Leuchtdiode (43-44) aufweist, **dadurch gekennzeichnet, dass**

der erste Primärteil eine erste Primärwicklung eines Transformators (32) aufweist,

der erste Sekundärteil eine erste Sekundärwicklung des Transformators (32) und erste Elemente (33-34) aufweist, die eine erste Resonanzfrequenz und eine erste Impedanz definieren, wobei die ersten Elemente (33-34) einen ersten Kondensator (34) und einen ersten Induktor aufweisen, wobei die erste Impedanz einer Quadratwurzel eines Induktivitätswertes des ersten Induktors geteilt durch eine Quadratwurzel eines Kapazitätswertes des ersten Kondensators (34) entspricht,

der weitere Sekundärteil weitere eine weitere Resonanzfrequenz definierende Elemente (37-38) und eine weitere Impedanz aufweist, wobei die weitere Resonanzfrequenz der ersten Resonanzfrequenz im Wesentlichen entspricht und wobei die weitere Impedanz im Wesentlichen anders ist als die erste Impedanz, wobei die erste Resonanzfrequenz eine Schaltfrequenz eines Spannungssignals definiert, das von der Brückenschaltung (2) zu der Resonanzschaltung (3) geliefert werden soll, wobei die Schaltfrequenz der Brückenschaltung (2) der halben ersten Resonanzfrequenz im Wesentlichen entspricht, und wobei jede Impedanz einen Mittelwert eines betreffenden, von der Resonanzschaltung (3) an die betreffende Lastschaltung (4, 4') zu liefernden Stromsignals definiert, und

der weitere Sekundärteil eine weitere Sekundärwicklung des Transformators (32) aufweist, oder die Resonanzschaltung (3) einen weiteren mit der Brückenschaltung (2) gekoppelten Primärteil aufweist, wobei der weitere Primärteil eine Primärwicklung eines anderen Transformators (36) aufweist und wobei der weitere Sekundärteil eine Sekundärwicklung des anderen Transformators (36) aufweist.

**2.** Versorgungsschalung (6) nach Anspruch 1, wobei der erste Induktor die erste Sekundärwicklung und/oder eine Leckinduktivität (33) des Transformators aufweist.

**3.** Versorgungsschaltung (6) nach Anspruch 1, die weiterhin einen Schalter (91-95) zum Dämpfen der bersten Leuchtdiode (41-42) der ersten Lastschaltung (4) aufweist.

**4.** Versorgungsschaltung (6) nach Anspruch 3, die weiterhin einen Controller zur Steuerung des Schalters (91-95) synchron zu der Brückenschaltung (2) aufweist.

**5.** Versorgungsschaltung (6) nach Anspruch 1, die weiterhin einen Beruhigungskondensator (71-72) zur Beruhigung eines Eingangssignals für die erste Leuchtdiode (41-42) der ersten Lastschaltung (4) aufweist.

**6.** Versorgungsschaltung (6) nach Anspruch 1, die weiterhin Entkopplungsdioden (81-82) zur Entkopplung zweier antiparalleler Gruppen ersten Leuchtdioden (41-42) der ersten Lastschaltung (4) voneinander aufweist.

**7.** Einrichtung mit der Versorgungsschaltung (6) nach Anspruch 1 und weiterhin mit einer ersten Lastschaltung (4).

**Revendications**

**1.** Circuit d'alimentation (6) comprenant un circuit en pont (2) et un circuit de résonance (3), le circuit de résonance (3) comprenant une première partie primaire qui est couplée au circuit en pont (2) et une première partie secondaire qui est couplée à un premier circuit de charge (4), le premier circuit de charge (4) comprenant une première diode électroluminescente (41 à 42), le circuit de résonance (3) comprenant une nouvelle autre partie secondaire à coupler à un nouveau autre circuit de charge (4'), le nouveau autre circuit de charge (4') comprenant une nouvelle autre diode électroluminescente (43 à 44), **caractérisé en ce que** :

la première partie primaire comprend un premier enroulement primaire d'un transformateur (32),
la première partie secondaire comprend un premier enroulement secondaire du transformateur (32) et des premiers éléments (33 à 34) définissant une première fréquence de résonance et une première impédance, les premiers éléments (33 à 34) comprenant un premier condensateur (34) et une première bobine d'inductance, la première impédance étant égale à une racine carrée d'une valeur d'inductance de la première bobine d'inductance qui est divisée par une racine carrée d'une valeur de la capacité du premier condensateur (34), la nouvelle autre partie secondaire comprend de nouveaux autres éléments (37 à 38) définissant une nouvelle autre fréquence de résonance et une nouvelle autre impédance, la nouvelle autre fréquence de résonance étant sensiblement égale à la première fréquence de résonance et la nouvelle autre impédance étant sensiblement différente de la première impédance, la première fréquence de résonance définissant une fréquence de commutation d'un signal de tension à fournir à partir du circuit en pont (2) au circuit de résonance (3), la fréquence de commutation du circuit en pont (2) étant sensiblement égale à la moitié de la première fréquence de résonance, et chaque impédance définissant une valeur moyenne d'un signal de courant respectif à fournir à partir du circuit de résonance (3) au circuit de charge respectif (4, 4'), et la nouvelle autre partie secondaire comprend un nouveau autre enroulement secondaire du transformateur (32) ou le circuit de résonance (3) comprend une nouvelle autre partie primaire qui est couplée au circuit en pont (2), cas dans lequel la nouvelle autre partie primaire comprend un enroulement primaire d'un autre transformateur (36) et cas dans lequel la nouvelle autre partie secondaire comprend un enroulement secondaire de l'autre transformateur (36).

**2.** Circuit d'alimentation (6), tel que défini dans la revendication 1, la première bobine d'inductance comprenant le premier enroulement secondaire et/ou une inductance de fuite (33) du transformateur (32).

**3.** Circuit d'alimentation (6), tel que défini dans la revendication 1, comprenant en outre un commutateur (91 à 95) pour baisser la lumière de la première diode électroluminescente (41 à 42) du premier circuit de charge (4).

**4.** Circuit d'alimentation (6), tel que défini dans la revendication 3, comprenant en outre un contrôleur pour commander le commutateur (91 à 95) en synchronisation avec le circuit en pont (2).

**5.** Circuit d'alimentation (6), tel que défini dans la revendication 1, comprenant en outre un condensateur de filtrage (71 à 72) pour le filtrage d'un signal d'entrée pour la première diode électroluminescente (41 à 42) du premier circuit de charge (4).

6. Circuit d'alimentation (6), tel que défini dans la revendication 1, comprenant en outre des diodes de découplage (81 à 82) pour découpler deux groupes antiparallèles de premières diodes électroluminescentes (41 à 42) du premier circuit de charge (4) l'un de l'autre.

7. Dispositif comprenant le circuit d'alimentation (6), tel que défini dans la revendication 1, et comprenant en outre le premier circuit de charge (4).

# FIG. 1

# FIG. 2

# FIG. 3

# FIG. 4

FIG. 5

FIG. 6

FIG. 7

FIG. 8

FIG. 9

**FIG. 10**

**FIG. 11**

FIG. 12

FIG. 13

FIG. 14

EP 2 127 487 B1

**FIG. 15**

**FIG. 16**

**FIG. 17**

## FIG. 18

## FIG. 19

## FIG. 20

## FIG. 21

**EP 2 127 487 B1**

## REFERENCES CITED IN THE DESCRIPTION

**Patent documents cited in the description**

- WO 2005048658 A
- WO 03056878 A
- WO 03088719 A